Europäisches Patentamt

European Patent Office

Office européen des brevets

(19)

(11) Veröffentlichungsnummer: **0 249 732**
**B1**

(12) **EUROPÄISCHE PATENTSCHRIFT**

(45) Veröffentlichungstag der Patentschrift: **16.01.91**

(51) Int. Cl.⁵: **G 01 N 31/22**

(21) Anmeldenummer: **87106622.1**

(22) Anmeldetag: **07.05.87**

(54) **Kolorimetrische Nachweiseinrichtung.**

(30) Priorität: **21.05.86 DE 3617023**

(43) Veröffentlichungstag der Anmeldung:
**23.12.87 Patentblatt 87/52**

(45) Bekanntmachung des Hinweises auf die
Patenterteilung:
**16.01.91 Patentblatt 91/03**

(84) Benannte Vertragsstaaten:
**DE FR GB IT NL SE**

(56) Entgegenhaltungen:
**CA-A-1 209 020**
**US-A-2 249 867**
**US-A-3 945 798**
**US-A-4 205 043**

(73) Patentinhaber: **Drägerwerk Aktiengesellschaft**
**Moislinger Allee 53-55**
**D-2400 Lübeck 1 (DE)**

(72) Erfinder: **Bäther, Wolfgang, Dr.**
**Schaluppenweg 4**
**D-2400 Lübeck (DE)**

Courier Press, Leamington Spa, England.

EP 0 249 732 B1

**Beschreibung**

Die Erfindung betrifft eine kolorimetrische Nachweiseinrichtung, insbesondere ein Gasdosimeter, welche in einem mindestens einseitig öffenbaren durchsichtigen Gehäuse einen streifenförmigen Träger mit einem Nachweisreagenz enthält.

Ein derartiges Gasdosimeter ist aus der DE—OS 31 37 756 bekanntgeworden.

Ein mit einem Nachweisreagenz imprägnierter Streifen entwickelt bei seiner Exposition an das nachzuweisende Gas eine Farbänderung, welche mit andauernder Expositionszeit entlang des Streifens fortschreitet. Die verfärbte Länge bildet dann das Maß für die nachzuweisende Gaskonzentration.

Dabei lassen sich besonders bei Messung kleiner Schadstoffkonzentrationen über einen längeren Meßzeitraum solche Reagenzien, die zwar eine empfindliche und spezifische Farbreaktion mit dem nachzuweisenden Gas ergeben, bei denen aber der gebildete Farbstoff innerhalb der Imprägnierung mit hoher Diffusionsgeschwindigkeit löslich ist, nicht für eine Längenanzeige benutzen, weil der Farbstoff nicht als Ablesemittel in der Reaktionszone verbleibt, sondern sich aus dieser heraus auch über die noch nicht umgesetzten Bereiche verteilt und damit eine Längenablesung unmöglich macht. Eine Auswertung wäre dann allenfalls hinsichtlich der Farbsättigung möglich, doch ist dies ohne Hilfsmittel schwieriger und ungenauer als eine Längenablesung.

In der US—A—2,249,867 ist ein streifenförmiger Indikatorträger beschrieben, welcher reihenweise angeordnete Plaketten mit imprägnierten Farbreagenzien trägt. Jede der Plaketten ist mit unterschiedlich empfindlich auf beispielsweise Feuchtigkeit reagierendem Farbreagenz ausgestattet, so daß die verfärbte Plakette mit höchster Empfindlichkeit die größte Feuchtigkeitsmenge bzw. -konzentration angibt, der der Indikatorträger ausgesetzt war.

Der vorliegenden Erfindung liegt somit die Aufgabe zugrunde, die Verwendung der bekannten Nachweiseinrichtung auf solche Reagenzsysteme zu erweitern, in denen der gebildete Farbstoff nicht über die Reaktionszone hinaus diffundiert und als Längenverfärbungszone für die Anzeige des nachzuweisenden Gases dienen kann.

Die Lösung der Aufgabe erfolgt durch die im Anspruch 1 genannten Merkmale.

Die mit der Erfindung erzielten Vorteile liegen im wesentlichen darin, daß die Plaketten einfach auf den Träger aufzubringen sind, indem beispielsweise auf benetzbar ausgerüsteten Feldern mittels einer Pipette das entsprechende gelöste nachweisreagenz aufgebrcht wird. Da die einzelnen Plaketten durch mehr oder weniger große unbenetzbare Zwischenräume voneinander getrennt sind, ist ein Verfärben des Nachweisreagenzes auf eine Plakette beschränkt, und die Verfärbung kann nicht auf die nächste Plakette durch bloße Diffusion der Reaktionsprodukte innerhalb des Nachweisreagenzes erfolgen. Es wird vielmehr sichergestellt, daß die Verfärbung der einzelnen Plaketten im wesentlichen nur auf die Einwirkung des Schadstoffes zurückzuführen ist.

Die Dimensionierung und Formgebung der einzelnen Plaketten kann an die geforderte Ablesegenauigkeit leicht angepaßt werden. Für empfindliche Dosimeter können beispielsweise größere, quadratische Plaketten aufgebracht sein, wohingegen zur Erhöhung der Empfindlichkeit eine dichte Folge von quer zur Diffusionsrichtung angeordneten kleinsten Plakettenstreifen mit möglichst geringem Abstand zueinander vorgesehen sein können.

Mittels einer Folge von in der Fläche, also nach Länge und/oder Breite unterschiedlichen Plaketten lassen sich Geräte mit in sich unterschiedlicher Empfindlichkeit und damit sehr großem Meßbereich darstellen; in der Auswertung werden dabei Plaketten unterschiedlicher Größe verschieden gewichtet.

Da die Anzahl der verfärbten Plaketten nunmehr das Maß für die Schadstoffkonzentration bildet, ist die Anbringung einer Meßskala auf dem Gehäuse nicht notwendig. Dadurch entfällt die aufwendige Ausrichtung der Meßskala zur Lage der Reagenzschicht.

Somit sind mit der erfindungsgemäßen Nachweiseinrichtung auch solche Reagenzien einer Längenmessung der Verfärbungszone zugänglich, die bei den bekannten Einrichtungen nur für eine Farbtiefen-Vergleichsmessung einsetzbar sind.

Vorteilhafterweise können solche Reagenzien in den Plaketten enthalten sein, die in gelöster Form vorliegen. Sie sind auf den benetzbaren Feldern leicht aufzubringen, bleiben durch die Aufteilung in Plaketten in ihrer flächigen Verteilung auf dem gesamten Bereich des Trägers erhalten und zeigen sich bezüglich einer Farbreaktion als besonders reaktionsfähig.

Für den Fall, daß die einzelnen Plaketten eine sehr geringe Auftragungsmenge an Nachweisreagenz besitzen, ist es vorteilhaft, in dem Dosimetergehäuse eine Pufferkammer vorzusehen, welche in den Reagenzraum solche flüchtigen Bestandteile abgibt, welche aus der Plakette hinausdiffundieren könnten. Dadurch wird eine gleichbleibende Zusammensetzung der einzelnen Reagenzbestandteile in den Plaketten gewährleistet, und es kann während längerer Lagerzeiten nicht zum Austrocknen der Nachweisreagenzien kommen.

Auch während der Benutzung des Gasdosimeters, daß heißt bei geöffnetem Gehäuse, werden die flüchtigen Anteile des Reagenzsystems nachgeliefert, so daß es im ursprünglichen, für die Nachweisreaktion erforderlichen Gleichgewichtszustand verbleibt.

Für solche Reagenzsysteme, welche unter Lufteinwirkung zu unerwünschten Reaktionen während der Lagerung führen, ist es vorteilhaft, das Dosimetergehäuse mit einem Inertgas zu füllen. Dies kann zum Beispiel Stickstoff oder auch ein sauerstofftreies Gasgemisch sein.

Vorteilhafterweise besteht der Träger aus einer Polyesterfolie, die sich leicht mit einzelnen Plaketten imprägnieren läßt.

Als geeigneter Untergrund für die Plaketten hat sich Zellulose erwiesen. Weitere Plakettenmaterialien können beispielsweise Kieselgel oder Aluminiumoxid sein. Das Gasdosimeter eignet sich in hervorragender Weise zum Nachweis von Formaldehyd, wobei die Plaketten mit einem Pararosanilin-Chlorwasserstoff-Sulfit-Reagenz imprägniert sind. Dabei läuft die Nachweisreaktion in den Plaketten derart ab, daß Pararosanilin Säure-katalysiert mit Formaldehyd zu einem Imin reagiert, an das Sulfit-Ionen unter Bildung eines Sulfonsäurederivates addieren und schließlich einen blauen Farbstoff bilden.

Um eine Austrocknung des Nachweisreagenzes zu verhindern, ist es zweckmäßig, als Feuchtestabilisator ein Hydrokolloid beizumischen. Dies kann beispielsweise aus Gelatine oder Pektin bestehen.

Da das während der Pararosanilin-Reaktion gebildete Sulfit beispielsweise durch Luftoxidation zu Schwefelsäure umgewandelt wird und diese eine Zersetzung des Farbstoffes bewirkt, wird dem Nachweisreagenz zweckmäßigerweise Ascorbinsäure als Sulfit-Oxidations-Inhibitor zugesetzt.

Um zu vermeiden, daß während der Lagerzeit eine Luftfüllung des Dosimetergehäuses zu chemischen Umsetzungen im nachweisreagenz führen könnte, die eine sichtbare Farbreaktion bei Gebrauch vereiteln würden, wird das Dosimetergehäuse vorteilhafterweise mit einem sauerstofffreien Inertgas gefüllt. Dies ist im besonderen bei dem Nachweis von Formaldehyd angezeigt, da während dieser langen Zeit das im Reagenz enthaltene Schwefeldioxid oxidieren und die daraus entstehende Schwefelsäure das Nachweisreagenz zerstören könnte.

Um eine gleichbleibende Konsistenz des Nachweisreagenzes sowohl während der Lagerzeit als auch während der Gebrauchszeit des Gasdosimeters zu gewährleisten, ist die Pufferkammer mit einer körnigen Füllung aus Siliziumdioxid versehen, welche mit einer Chlorwasserstoff-Natriumsulfit-Wasser-Lösung imprägniert ist. Eine solche Pufferkammer ist besonders dann vorzusehen, wenn die Anzeigeempfindlichkeit durch Herabsetzung des Reagenzvolumens in den Plaketten bewirkt ist. In einem solchen Falle können schon geringe Schadstoffmengen für eine vollständige Farbumsetzung ausreichen. Dabei steht dem geringen Reagenzvolumen ein möglichst großes diffundierendes Gasvolumen gegenüber. Die Verluste an flüchtigen Anteilen kann das geringe Reagenzvolumen dann aus sich heraus nicht mehr decken.

Ein Ausführungsbeispiel der Erfindung ist anhand einer schematischen Zeichnung dargestellt und wird im folgenden näher erläutert.

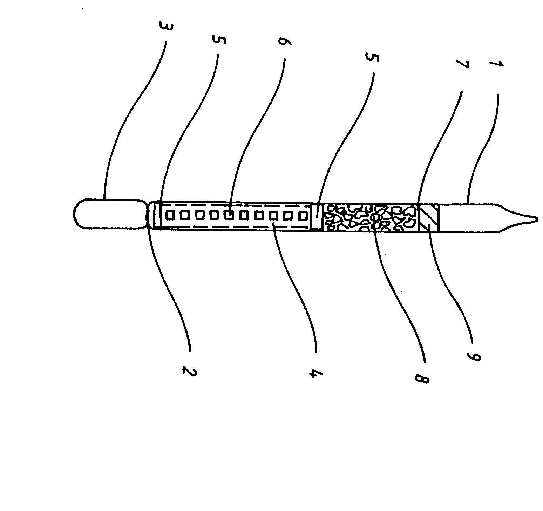

Die einzige Figur zeigt die Ansicht eines kolorimetrischen Gasdosimeters in einem durchsichtigen röhrchenförmigen Glasgehäuse (1). Eines seiner Enden ist mit einer an der Einschnürung (2) abbrechbaren Kappe (3) öffenbar. Ein streifenförmiger Träger (4) ist zwischen zwei durchlässigen Halteelementen (5) dem öffenbaren Ende zugewandt im Gehäuse (1) aufgenommen. Auf dem Träger (4) sind mehrere hintereinander angeordnete quadratische Plaketten (6) aufgebracht. Sie enthalten das für die Gasmessung notwendige Reagenz.

Dem Träger nachgeschaltet ist eine Pufferkammer (7), welche eine Füllung (8) enthält, die durch einen Stopfen (9) in ihrer Lage fixiert ist.

## Patentansprüche

1. Kolorimetrische Nachweiseinrichtung, insbesondere Gasdosimeter, welche in einem mindestens einseitig öffenbaren durchsichtigen Gehäuse (1) einen streifenförmigen Träger (4) mit einem Nachweisreagenz enthält, dadurch gekennzeichnet, daß das Nachweisreagenz in auf dem Träger (4) reihenweise angeordnete iprägnierten Plaketten (6) enthalten ist, und daß ausgehend vom geöffneten Ende des Gehäuses die Anzahl der dem nachzuweisenden Gas ausgesetzten verfärbten Plaketten (6) als Verfärbungslänge auf dem Träger (4) ein Maß für die nachzuweisende Gaskonzentration bildet.

2. Kolorimetrische nachweiseinrichtung nach Anspruch 1, dadurch gekennzeichnet, daß das Nachweisreagenz als eine auf die Plaketten (6) aufgebrachte Lösung vorliegt.

3. Kolorimetrische Nachweiseinrichtung nach Anspruch 1 oder 2, dadurch gekennzeichnet, daß dem Träger (4) eine Pufferkammer (7) nachgeschaltet ist, welche solche flüchtigen Substanzen enthält und in den Innenraum des Gehäuses (1) abgibt, die mit den auf den Plaketten (6) befindlichen flüchtigen Reagenzbestandteilen im Gleichgewicht sind.

4. Kolorimetrische Nachweiseinrichtung nach einem der Ansprüche 1 bis 3, dadurch gekennzeichnet, daß das geschlossene Gehäuse (1) mit einem Inertgas gefüllt ist.

5. Kolorimetrische Nachweiseinrichtung nach einem der Ansprüche 1 bis 4, dadurch gekennzeichnet, daß der Träger aus einer Polyesterfolie (4) besteht.

6. Kolorimetrische Nachweiseinrichtung nach einem der Ansprüche 1 bis 5, dadurch gekennzeichnet, daß der Träger (4) im Bereich der Plaketten (6) mit Zellulosematerial beschichtet ist.

7. Kolorimetrische Nachweiseinrichtung nach einem der Ansprüche 1 bis 6, dadurch gekennzeichnet, daß zum Nachweis von Formaldehyd die Plaketten (6) mit einem Pararosanilin-Chlorwasserstoff-Sulfit-Reagenz imprägniert sind.

8. Kolorimetrische Nachweiseinrichtung nach Anspruch 7, dadurch gekennzeichnet, daß dem Nachweisreagenz als Feuchtestabilisator ein Hydrokolloid beigemischt ist.

9. Kolorimetrische Nachweiseinrichtung nach Anspruch 7, dadurch gekennzeichnet, daß als Sulfit-Oxidations-Inhibitor dem Nachweisreagenz Ascorbinsäure zugesetzt ist.

10. Kolorimetrische Nachweiseinrichtung nach einem der Ansprüche 7 bis 9, dadurch gekennzeichnet, daß das Gehäuse (1) mit einer sauerstofffreien Atmosphäre als Inertgas gefüllt ist.

11. Kolorimetrische Nachweiseinrichtung nach Anspruch 7, dadurch gekennzeichnet, daß die Pufferkammer (7) eine körnige Füllung (8) aus Siliziumdioxid enthält, welche mit einer Chlorwasserstoff-Natriumsulfit-Wasser-Lösung imprägniert ist.

## Revendications

1. Dispositif de détection colorimétrique, dosimètre pour gaz en particulier, comportant, dans un corps (1) transparent pouvant être ouvert sur au moins un côté, un support (4) en forme de bande avec un réactif détecteur, caractérisé en ce que le réactif détecteur est contenu dans des plaquettes (6) imprégnées, disposées en rangées sur le support (4), et que, partant de l'extrémité ouverte du corps, le nombre de plaquettes (6) exposées au gaz à détecter et ayant changé de couleur, constitue en tant que longueur présentant un changement de couleur sur le support (4), une échelle permettant de mesurer la concentration de gaz à détecter.

2. Dispositif de détection colorimétrique selon la revendication 1, caractérisé en ce que le réactif détecteur est présent sous forme d'une solution appliquée sur les plaquettes (6).

3. Dispositif de détection colorimétrique selon la revendication 1 ou 2, caractérisé en ce que, en aval du support (4), est disposé un compartiment tampon (7) contenant et transmettant dans l'intérieur du corps (1), des matières volatiles en équilibre par rapport aux composants volatils du réactif que présente les plaquettes (6).

4. Dispositif de détection colorimétrique selon l'une quelconque des revendications 1 à 3, caractérisé en ce que le corps fermé (1) est rempli d'un gaz inerte.

5. Dispositif de détection colorimétrique selon l'une quelconque des revendications 1 à 4, caractérisé en ce que le support est constitué d'un film polyester (4).

6. Dispositif de détection colorimétrique selon l'une quelconqe des revendications 1 à 5, caractérisé en ce que, au niveau des plaquettes (6), le support (4) est revêtu d'une matière cellulosique.

7. Dispositif de détection colorimétrique selon l'une quelconque des revendications 1 à 6, caractérisé en ce que, pour la détection de formaldéhydes, les plaquettes (6) sont imprégnées d'un réactif du type pararosaniline-gaz chlorhydrique-sulfite.

8. Dispositif de détection colorimétrique selon la revendication 7, caractérisé en ce qu'un hydrocolloïde servant de stabilisateur d'humidité est adjoint au réactif détecteur.

9. Dispositif de détection colorimétrique selon la revendication 7, caractérisé en ce que de l'acide ascorbique servant d'inhibiteur d'oxydation de sulfite est ajouté au réactif détecteur.

10. Dispositif de détection colorimétrique selon l'une quelconque des revendications 1 à 9, caractérisé en ce que le corps (1) est rempli d'une atmosphère exempte d'oxygène, servant de gaz inerte.

11. Dispositif de détection colorimétrique selon la revendication 7, caractérisé en ce que le compartiment tampon (7) contient une charge (8) granuleuse constituée de silice, imprégnée d'une solution du type gaz chlorhydrique-sulfite de sodium-eau.

## Claims

1. A colorimetric detecting device, in particular a gas dosimeter, which contains a striplike carrier (4) with a detecting reagent, in a transparent housing (1), able to be opened at least on one side, characterised in that the detecting reagent is contained in impregnated small plates (6) arranged on the carrier (4) in series and in that, emanating from the open end of the housing, the number of the discoloured small plates (6) exposed to the gas to be detected forms as discolouring length on the carrier (4) a gauge for the gas concentration to be detected.

2. A colorimetric detecting device according to claim 1, characterised in that the detecting reagent is present as a solution applied to the small plates (6).

3. A colorimetric detecting device according to claim 1 or 2, characterised in that a buffer chamber (7) is connected downstream of the carrier (4), which contains volatile substances for delivery into the inner chamber of the housing (1), which substances are in equilibrium with the volatile reagent components located on the small plates (6).

4. A colorimetric detecting device according to one of claims 1 to 3, characterised in that the closed housing (1) is filled with an inert gas.

5. A colorimetric detecting device according to one of claims 1 to 4, characterised in that the carrier consists of a polyester film (4).

6. A colorimetric detecting device according to one of claims 1 to 5, characterised in that the carrier (4) is coated in the region of the small plates (6) with cellulose material.

7. A colorimetric detecting device according to one of claims 1 to 6, characterised in that for detection of formaldehyde the small plates (6) are impregnated with a pararosaniline hydrochloric acid sulphite reagent.

8. A colorimetric detecting device according to claim 7, characterised in that a hydrocolloid is mixed with the detecting reagent as humidity stabilizer.

9. A colorimetric detecting device according to claim 7, characterised in that ascorbic acid is added to the detecting reagent as sulphite oxidation inhibitor.

10. A colorimetric detecting device according to one of claims 7 to 9, characterised in that the housing (1) is filled with an oxygen-free atmosphere as inert gas.

11. A colorimetric detecting device according to claim 7, characterised in that the buffer chamber (7) contains a granular filling (8) of silicon dioxide which is impregnated with an aqueous hydrochloric acid sodium sulphite solution.